# FASCICULE DE BREVET EUROPEEN

(11) **EP 0 583 996 B1**
(45) Date de publication et mention de la délivrance du brevet: **22.04.1998**
(21) Numéro de dépôt: 93401795.5
(22) Date de dépôt: 09.07.1993
(51) Int. Cl.: A01N 25/34, A01N 59/16, A01N 59/20, C08K 9/12

(54) **Matériau synthétique polymère ayant une action antiseptique et/ou antioxydante et procédé de fabrication dudit matériau**
Synthetisches Polymermaterial mit antiseptischer und/oder antioxydierender Wirkung und Verfahren zu seiner Herstellung
Synthetic polymeric material having an antiseptic and/or antioxydant activity and process for preparing it

(30) Priorité: 21.07.1992 FR 9208975
(43) Date de publication de la demande: 23.02.1994
(73) Titulaire: L'OREAL, 75008 Paris (FR)
(72) Inventeur: Gueret, Jean-Louis, F-75018 Paris (FR)
(74) Mandataire: Peuscet, Jacques

(56) Documents cités:
- CH-A- 401 468
- FR-A- 2 322 801

## Description

La présente invention concerne un matériau synthétique polymère ayant une action antiseptique et/ou antioxydante que l'on peut utiliser, notamment, pour fabriquer par moulage des pièces susceptibles de libérer des agents antiseptique(s) et/ou antioxydant(s) et, par conséquent, empêcher la dégradation, par des microorganismes, tels que virus, bactéries, moisissures ou fungi, et/ou par l'oxygène de l'air, des produits fluides avec lesquels lesdites pièces sont en contact.

De tels matériaux trouvent leur utilité dans de nombreux domaines. Le problème à résoudre, selon la présente invention, était de trouver un polymère qui permette de fabriquer par moulage des éléments d'un dispositif de distribution de produit fluide. On sait que dans les dispositifs de distribution par doses successives de produits fluides, notamment cosmétiques, une partie du produit distribué reste dans le canal de distribution alors que la distribution a cessé. Le produit restant dans le canal de distribution est en contact avec l'air et il est susceptible de se dégrader sous l'influence des microorganismes de l'atmosphère et/ou de l'oxygène de l'air. Par conséquent, la dose distribuée suivante peut contenir des produits nocifs et provoquer, par exemple, des irritations lorsqu'elle est appliquée sur la peau. On cherche donc à éviter cette dégradation.

Il est connu de préparer des polymères contenant des ions métalliques, qui confèrent aux polymères une action antiseptique. Il est également connu de préparer des polymères contenant une charge minérale dans laquelle sont introduits, par imprégnation à l'aide de sels hydrosolubles, des ions métalliques. Selon EP-A-0 116 865, on réalise une imprégnation de zéolites par des ions métalliques : mais l'action combinée des zéolites et des ions métalliques a tendance à provoquer une réticulation et un durcissement très rapide des polymères. Il est donc nécessaire de mouler le polymère chargé en zéolites et d'imprégner seulement ensuite les zéolites situés à la surface de la pièce moulée à l'aide d'une solution contenant les ions métalliques. Dans ces conditions, le taux de zéolites imprégnés est faible et, par conséquent, l'activité antiseptique du polymère est trop faible pour résoudre le problème exposé ci-dessus.

Dans EP-A-0 444 939, on propose de mélanger à un polymère des particules de silice enrobées d'un aluminosilicate de métal ayant une activité antiseptique. Ce procédé évite d'avoir à imprégner un gel de silice et permet d'obtenir des particules ayant une teneur élevée en ions métalliques : mais il est compliqué et coûteux.

Selon la présente invention, on a trouvé que l'on pouvait obtenir un polymère contenant une charge pré-imprégnée d'agent actif sans provoquer trop rapidement la réticulation et le durcissement du polymère chargé dès lors que le polymère est une résine thermodurcissable et que la charge est une charge organique imprégnée d'agent antiseptique et/ou antioxydant.

On a, en outre, constaté que, lorsqu'on réalise au moins une partie des surfaces du canal de distribution d'un dispositif de distribution de produit fluide en un polymère thermodurci selon l'invention contenant une charge organique pré-imprégnée avec au moins un agent antiseptique et/ou au moins un agent antioxydant, on peut éviter totalement la dégradation du produit restant dans ce canal de distribution, dès lors que le dispositif de distribution comporte un système de fermeture sans reprise d'air, et que, même en l'absence de système de fermeture sans reprise d'air, on peut fortement diminuer la dégradation du produit distribué.

La demande de brevet français n° 92-08 976 déposée par la demanderesse le 21 Juillet 1992 décrit l'utilisation du matériau synthétique polymère de la présente demande dans une tête de distribution comportant un système de fermeture sans reprise d'air.

La présente invention a donc pour objet un matériau synthétique contenant au moins un polymère thermodurci et une charge imprégnée, ledit matériau ayant, par contact, une action antiseptique et/ou antioxydante sur un produit fluide, caractérisé par le fait que la charge est une charge organique imprégnée d'au moins un agent antiseptique hydrosoluble et/ou d'au moins un agent antioxydant hydrosoluble.

Le polymère thermodurci est préparé, de préférence, à partir d'une résine aminoplaste. La résine aminoplaste peut être une résine mélamine-formaldéhyde, mais est, de préférence, une résine urée-formaldéhyde.

L'agent antiseptique est, de préférence, un sel métallique hydrosoluble et, plus particulièrement, un sel hydrosoluble de cuivre, de zinc, ou d'argent, de préférence, un sulfate de cuivre ou de zinc ou le nitrate d'argent. Le sulfate de cuivre est préféré.

L'agent antioxydant est, avantageusement, choisi dans le groupe formé par les acides gentisique, homogentisique, pidolique, ascorbique, citrique et leurs mélanges.

Les agents antiseptique(s) et/ou antioxydant(s) sont, selon l'invention, sous forme imprégnée sur une charge organique à l'état particulaire. La charge est, avantageusement, sous forme de poudre ou de granules de faible dimension ; elle peut également être sous forme de fibres. Dans le cas de poudre ou de granules, la charge a, de préférence, une granulométrie comprise entre 5 µm et 2 mm. Dans le cas des fibres, celles-ci ont, de préférence, une longueur comprise entre 0,1 et 2 mm et un diamètre compris entre 5 µm et 0,5 mm.

La charge organique est avantageusement constituée par au moins un produit naturel à base de polysaccharide(s). La charge organique peut être, en particulier, de la poudre ou de la sciure de bois, de la cellulose, plus particulièrement de coton, de l'amidon, de la gomme de carragénate, des alginates, des xanthanes, des scléroglucanes ou leurs mélanges. La charge est, plus particulièrement, constituée par de la cellulose.

De préférence, le matériau selon l'invention contient 30 à 98 % en poids de résine thermodurcissable et 2 à 70 % en poids de charge(s) organique(s) imprégnée(s). Il contient, de préférence, de 50 % à 70 % en poids de charge(s) organique(s) imprégnée(s).

Sur la charge, sont fixés par imprégnation, de préférence, de 0,01 à 50 % en poids d'agent(s) antiseptique(s) et/ou antioxydant(s), la quantité totale d'agent(s) fixée étant comprise, de préférence, entre 2 et 20 % en poids (les pourcentages étant pris par rapport au poids de la charge).

La présente invention a également pour objet la préparation d'un matériau synthétique polymère tel que ci-dessus défini, caractérisé par le fait que l'on mélange au moins une résine thermodurcissable aminoplaste avec au moins une charge organique à l'état particulaire, ladite charge étant imprégnée d'au moins un agent antiseptique et/ou d'au moins un agent antioxydant, et que l'on fait, au moins partiellement, réticuler le mélange.

Selon la présente invention, on peut imprégner la charge en l'immergeant dans une solution aqueuse, ayant avantageusement une concentration en agent(s) antiseptique(s) et/ou antioxydant(s) voisine de la saturation, puis en la séchant, notamment pendant 24 heures à température ambiante.

La charge peut être imprégnée soit avant son mélange avec la résine thermodurcissable, soit après son mélange avec la résine thermodurcissable, la charge étant alors imprégnée avant la réticulation de la résine thermodurcissable. Il faut noter que la charge organique contenue dans le polymère ne peut plus être imprégnée après réticulation du polymère. Lorsque la charge a été mélangée à la résine thermodurcissable, le matériau obtenu doit être sous forme particulaire pour pouvoir être utilisé ultérieurement. Le matériau synthétique polymère selon l'invention peut être utilisé sous forme de granules ou de billes que l'on met en contact avec le produit à traiter ; les granules ou les billes sont réticulés par tout procédé connu de réticulation des résines thermodurcissables. Mais il est, de préférence, moulé, le moulage pouvant être effectué par tout procédé connu pour les résines thermodurcissables.

Selon les conditions du procédé de moulage choisi, on peut obtenir des pièces en résine thermodurcissable présentant des caractéristiques de relargage contrôlées. Le moulage peut, par exemple, être effectué dans un moule en compression, avec chauffage simultané, par exemple à 130 à 150°C, pendant 3 à 4 minutes, éventuellement en présence d'un catalyseur : on obtient ainsi une pièce relativement dense présentant un faible pouvoir de relargage d'agent antiseptique et/ou d'agent antioxydant. Si l'on souhaite augmenter le taux de relargage, on peut procéder à une légère abrasion sur au moins une partie de la surface de la pièce moulée qui doit être en contact avec le produit fluide à distribuer. Une autre méthode pour augmenter le taux de relargage d'agent antiseptique et/ou d'agent antioxydant consiste à introduire la résine imprégnée dans un moule et à compacter à froid ; ensuite, sans effectuer de compression, on chauffe, par exemple, pendant 5 ou 10 minutes à 130 à 150°C : on obtient une pièce légère ressemblant à une pièce frittée et présentant un pouvoir de relargage élevé.

Comme indiqué ci-dessus, le mélange de résine thermodurcissable et de charge(s) imprégnée(s) peut être moulé. En effet, on a constaté qu'en présence de charge(s) organique(s) imprégnée(s), la résine thermodurcissable ne réticule pas immédiatement. Par exemple, en présence d'une charge organique imprégnée de sels de cuivre, de zinc ou d'argent, il faut attendre 8 mois à température ambiante pour que 70% en poids de la résine thermodurcissable soient réticulés et que le matériau ne puisse plus être utilisé pour le moulage ; il peut cependant encore être utilisé tel quel, sous forme de granules ou de billes.

L'exemple donné ci-après, à titre illustratif et non limitatif, permettra de mieux comprendre l'invention.

On prend un produit urée-formaldéhyde en poudre vendu par la société "PERSTROP", ledit produit contenant 30 % en poids de résine urée-formaldéhyde et comme charge 70 % en poids de cellulose. On immerge ledit produit à température ambiante dans une solution aqueuse saturée de sulfate de cuivre et de zinc (50:50), comme agent antiseptique, et d'acide citrique, comme agent antioxydant, pendant environ 10 mn, en agitant vigoureusement de façon que la charge pompe la solution aqueuse et s'imprègne de sulfate de cuivre, de sulfate de zinc et d'acide citrique. On sépare ensuite la poudre de la solution et on la sèche dans un courant d'air sec à température ambiante pendant 24 heures. Lorsque la poudre est déshydratée, elle contient 8 % en poids de sulfate de cuivre, de sulfate de zinc et d'acide citrique.

Moins de 8 jours après sa préparation, on introduit la poudre ainsi obtenue dans un moule à froid, on compacte, et sans exercer de compression on chauffe à une température de 135°C pendant 3mn. La pièce moulée obtenue peut être utilisée comme pièce délimitant le canal de distribution dans une tête de distribution de crème cosmétique ; cette crème est conditionnée dans un récipient étanche et la tête de distribution ne comporte aucun système isolant de l'extérieur le canal de distribution. On a constaté qu'après une première distribution, la crème, qui était restée dans le canal de distribution pendant une semaine, n'a subi aucune dégradation, ni par un quelconque microorganisme ni par l'oxygène de l'air.

## Revendications

1. Matériau synthétique contenant au moins un polymère thermodurci et une charge particulaire imprégnée, ledit matériau ayant, par contact, une action antiseptique et/ou antioxydante sur un produit fluide, caractérisé par le fait que la charge est une charge organique imprégnée d'au moins un agent antiseptique hydrosoluble et/ou d'au moins un agent antioxydant hydrosoluble.

2. Matériau selon la revendication 1, caractérisé par le fait que le polymère thermodurci est obtenu à partir d'une résine aminoplaste.

3. Matériau selon la revendication 2, caractérisé par le fait que la résine aminoplaste est une résine urée-formaldéhyde.

4. Matériau selon l'une des revendications 1 à 3, caractérisé par le fait que l'agent antiseptique est au moins un sel hydrosoluble de cuivre, de zinc ou d'argent.

5. Matériau selon la revendication 4, caractérisé par le fait que le sel hydrosoluble est un sulfate ou un nitrate.

6. Matériau selon l'une des revendications 1 à 5, caractérisé par le fait que l'agent antioxydant est choisi dans le groupe formé par les acides gentisique, homogentisique, pidolique, ascorbique, citrique et leurs mélanges.

7. Matériau selon l'une des revendications 1 à 6, caractérisé par le fait que la charge organique est constituée par au moins un produit à base de polysaccharide(s).

8. Matériau selon la revendication 7, caractérisé par le fait que la charge organique est choisie dans le groupe formé par la poudre de bois, la sciure de bois, la cellulose, l'amidon, la gomme de carragénate, les alginates, les xanthanes, les scléroglucanes et leurs mélanges.

9. Matériau selon la revendication 8, caractérisé par le fait que la charge organique est constituée par de la cellulose.

10. Matériau selon l'une des revendications 1 à 9, caractérisé par le fait qu'il comporte 2 à 70% de charge organique imprégnée et 30 à 98% de résine aminoplaste.

11. Matériau selon la revendication 10, caractérisé par le fait qu'il comporte 50 à 70 % en poids de charge organique imprégnée.

12. Matériau selon l'une des revendications 1 à 11, caractérisé par le fait que la charge organique contient de 0,01 à 50 % en poids d'agent(s) antiseptique(s) et/ou d'agent(s) antioxydant(s).

13. Procédé de préparation d'un matériau selon l'une des revendications 1 à 12, caractérisé par le fait qu'on mélange au moins une résine aminoplaste avec au moins une charge organique à l'état particulaire, ladite charge organique étant imprégnée d'au moins un agent antiseptique et/ou d'au moins un agent antioxydant et que l'on fait, au moins partiellement, réticuler le mélange.

14. Procédé selon la revendication 13, caractérisé par le fait qu'on imprègne la charge organique avant son mélange avec la résine aminoplaste.

15. Procédé selon la revendication 14, caractérisé par le fait qu'on imprègne la charge organique après son mélange avec la résine aminoplaste.

16. Procédé selon l'une des revendications 13 à 15, caractérisé par le fait qu'on imprègne la charge organique en l'immergeant dans une solution aqueuse de sel(s) hydrosoluble(s) d'un ion métallique antiseptique et/ou d'agent(s) antioxydant(s) et en la séchant ensuite.

17. Procédé selon l'une des revendications 13 à 16, caractérisé par le fait qu'on thermodurcit le mélange dans un moule en compression par élévation de température de façon à obtenir une pièce moulée.

18. Procédé selon la revendication 17, caractérisé par le fait que la pièce moulée est soumise à une légère abrasion sur au moins une partie de sa surface.

19. Procédé selon l'une des revendications 13 à 16, caractérisé par le fait qu'on remplit un moule avec le mélange, on comprime à froid puis on durcit ensuite par élévation de température.

## Claims

1. Synthetic material containing at least one heat-cured polymer and an impregnated particulate filler, the said material having, on contact, an antiseptic and/or antioxidant action on a fluid product, characterized in that the filler is an organic filler impregnated with at least one water-soluble antiseptic agent and/or with at least one water-soluble antioxidant agent.

2. Material according to Claim 1, characterized in that the heat-cured polymer is obtained from an aminoplastic resin.

3. Material according to Claim 2, characterized in that the aminoplastic resin is a urea-formaldehyde resin.

4. Material according to one of Claims 1 to 3, characterized in that the antiseptic agent is at least one water-soluble copper, zinc or silver salt.

5. Material according to Claim 4, characterized in that the water-soluble salt is a sulphate or a nitrate.

6. Material according to one of Claims 1 to 5, characterized in that the antioxidant agent is chosen from the group consisting of gentisic, homogentisic, pidolic, ascorbic and citric acids and mixtures thereof.

7. Material according to one of Claims 1 to 6, characterized in that the organic filler consists of at least one product based on polysaccharide(s).

8. Material according to Claim 7, characterized in that the organic filler is chosen from the group consisting of wood powder, wood sawdust, cellulose, starch, carragenate gum, alginates, xanthans, scleroglucans and mixtures thereof.

9. Material according to Claim 8, characterized in that the organic filler consists of cellulose.

10. Material according to one of Claims 1 to 9, characterized in that it comprises 2 to 70 % of impregnated organic filler and 30 to 98 % of aminoplastic resin.

11. Material according to Claim 10, characterized in that it comprises 50 to 70 % by weight of impregnated organic filler.

12. Material according to one of Claims 1 to 11, characterized in that the organic filler contains from 0.01 to 50 % by weight of antiseptic agent(s) and/or of antioxidant agent(s).

13. Process for the preparation of a material according to one of Claims 1 to 12, characterized in that at least one aminoplastic resin is mixed with at least one organic filler in the particulate state, the said organic filler being impregnated with at least one antiseptic agent and/or at least one antioxidant agent, and in that the mixture is at least partially crosslinked.

14. Process according to Claim 13, characterized in that the organic filler is impregnated before being mixed with the aminoplastic resin.

15. Process according to Claim 14, characterised in that the organic filler is impregnated after being mixed with the aminoplastic resin.

16. Process according to one of Claims 13 to 15, characterized in that the organic filler is impregnated by being immersed in an aqueous solution of water-soluble salt(s) of an antiseptic metal ion and/or of antioxidant agent(s) and by subsequently being dried.

17. Process according to one of Claims 13 to 16, characterized in that the mixture is heat-cured in a mould under compression by a rise in temperature so as to obtain a moulded article.

18. Process according to Claim 17, characterized in that the moulded article is subjected to a slight abrasion on at least a proportion of its surface.

19. Process according to one of Claims 13 to 16, characterized in that a mould is filled with the mixture, compression is applied when cold and curing is subsequently produced by a rise in temperature.

## Patentansprüche

1. Synthetisches Material, das wenigstens ein wärmegehärtetes Polymer und einen imprägnierten partikelförmigen Füllstoff enthält, wobei das Material bei Berührung eine antiseptische und/oder antioxidierende Wirkung auf ein fluides Produkt besitzt, dadurch gekennzeichnet, daß der Füllstoff ein mit wenigstens einem wasserlöslichen antiseptischen Wirkstoff und/oder wenigstens einem wasserlöslichen antioxidierenden Wirkstoff imprägnierter, organischer Füllstoff ist.

2. Material nach Anspruch 1, dadurch gekennzeichnet, daß das wärmegehärtete Polymer aus einem Aminoplastharz erhalten wird.

3. Material nach Anspruch 2, dadurch gekennzeichnet, daß das Aminoplast-Harz ein Harnstoff-Formaldehyd-Harz ist.

4. Material nach einem der Ansprüche 1 bis 3, dadurch gekennzeichnet, daß der antiseptische Wirkstoff wenigstens ein wasserlösliches Kupfer-, Zink- oder Silbersalz ist.

5. Material nach Anspruch 4, dadurch gekennzeichnet, daß das wasserlösliche Salz ein Sulfat oder ein Nitrat ist.

6. Material nach einem der Ansprüche 1 bis 5, dadurch gekennzeichnet, daß der antioxidierende Wirkstoff ausgewählt ist unter Gentisinsäure, Homogentisinsäure, Pidolinsäure, Ascorbinsäure, Zitronensäure und Gemischen davon.

7. Material nach einem der Ansprüche 1 bis 6, dadurch gekennzeichnet, daß der organische Füllstoff von wenigstens einem auf Polysaccharid(en) basierenden Produkt gebildet wird.

8. Material nach Anspruch 7, dadurch gekennzeichnet, daß der organische Füllstoff ausgewählt ist unter Holzpulver, Sägemehl, Cellulose, Stärke, Carrageengummi, Alginaten, Xanthanen, Skleroglukanen und Gemischen davon.

9. Material nach Anspruch 8, dadurch gekennzeichnet, daß der organische Füllstoff Cellulose ist.

10. Material nach einem der Ansprüche 1 bis 9, dadurch gekennzeichnet, daß es 2 bis 70% imprägnierten organischen Füllstoff und 30 bis 98% Aminoplastharz umfaßt.

11. Material nach Anspruch 10, dadurch gekennzeichnet, daß es 50 bis 70 Gew.-% imprägnierten organischen Füllstoff umfaßt.

12. Material nach einem der Ansprüche 1 bis 11, dadurch gekennzeichnet, daß der organische Füllstoff 0,01 bis 50 Gew.-% antiseptische(n) Wirkstoff(e) und/oder antioxidierende(n) Wirkstoff(e) enthält.

13. Verfahren zur Herstellung eines Materials nach einem der Ansprüche 1 bis 12, dadurch gekennzeichnet, daß man wenigstens ein Aminoplastharz mit wenigstens einem partikelförmigen organischen Füllstoff vermischt, wobei der organische Füllstoff mit wenigstens einem antiseptischen Wirkstoff und/oder wenigstens einem antioxidierenden Wirkstoff imprägniert ist und man das Gemisch wenigstens teilweise vernetzen läßt.

14. Verfahren nach Anspruch 13, dadurch gekennzeichnet, daß man den organischen Füllstoff imprägniert, bevor man ihn mit dem Aminoplastharz vermischt.

15. Verfahren nach Anspruch 14, dadurch gekennzeichnet, daß man den organischen Füllstoff imprägniert, nachdem man ihn mit dem Aminoplastharz vermischt hat.

16. Verfahren nach einem der Ansprüche 13 bis 15, dadurch gekennzeichnet, daß man den organischen Füllstoff imprägniert, indem man ihn in eine wäßrige Lösung von wasserlöslichem(n) Salz(en) eines antiseptischen Metallions und/oder von antioxidierendem(n) Wirkstoff(en) taucht und anschließend trocknet.

17. Verfahren nach einem der Ansprüche 13 bis 16, dadurch gekennzeichnet, daß man das Gemisch in einer Form unter Druck mit Temperaturerhöhung wärmehärtet, so daß man ein Formteil erhält.

18. Verfahren nach Anspruch 17, dadurch gekennzeichnet, daß das Formteil einer leichten Abrasion an wenigstens einem Teil seiner Oberfläche unterzogen wird.

19. Verfahren nach einem der Ansprüche 13 bis 16, dadurch gekennzeichnet, daß man die Form mit dem Gemisch füllt, kalt komprimiert und anschließend durch Temperaturerhöhung härtet.
